# FASCICULE DE BREVET EUROPEEN

(11) **EP 0 536 031 B1**
(45) Date de publication et mention de la délivrance du brevet: **06.03.1996**
(21) Numéro de dépôt: 92402645.3
(22) Date de dépôt: 28.09.1992
(51) Int. Cl.: A01B 15/06

(54) **Pointe de soc amovible pour charrue**
Auswechselbare Pflugscharspitze
Removable plough share point

(30) Priorité: 30.09.1991 FR 9111980
(43) Date de publication de la demande: 07.04.1993
(73) Titulaire: HUARD S.A., F-44110 Chateaubriant (FR)
(72) Inventeur: Perret, Louis, F-44110 Chateaubriant (FR); Perrinel, Christian, F-44110 Chateaubriant (FR)
(74) Mandataire: Loyer, Bertrand

(56) Documents cités:
- EP-A- 0 174 881
- FR-A- 2 350 775
- GB-A- 2 100 562
- US-A- 1 401 877

## Description

La présente invention concerne les pointes de soc amovibles que l'on fixe à l'extrémité avant du soc de charrue afin de servir de pièce d'usure.

De manière connue en soi, une telle pointe de soc se présente sous la forme d'une pièce allongée, par exemple en forme de parallélogramme, dont les deux petits côtés formant les extrémités d'attaque de la terre au cours du travail sont amincis pour former des tranchants.

Une telle pièce est décrite et représentée dans le FR 2 086 271 déposé le 19 avril 1971.

Cette pointe de soc est fixée au soc avec l'un des tranchants vers l'avant en position de travail, puis, après usure de ce tranchant, elle est retournée de 180° afin d'utiliser le second tranchant.

Le GB 2 100 562 décrit une telle pointe de soc dont la partie médiane est plus épaisse que les parties d'extrémités par laquelle elle attaque la terre. Les renflements ainsi formés sont perpendiculaires à l'axe longitudinal de la pointe de soc et lui procurent une plus grande solidité. Une telle pointe de soc reste par contre soumise à une usure importante.

Le FR 2 570 242 déposé le 14 septembre 1984 par la demanderesse décrit une pointe de soc amovible correspondant au préambule de la première revendication, sur les bords de laquelle l'on a ajouté deux portions décalées latéralement globalement symétriques par rapport au centre géométrique de la pointe de soc. Ces portions décalées s'étendent chacune latéralement à partir d'un tranchant sur environ la moitié de la longueur de la pointe de soc.

La pointe de soc comportant de telles portions décalées assure alors non seulement la protection de l'extrémité du soc mais aussi celle du contresep et de l'aileron-coutre, ce qui constitue une amélioration notable par rapport à la pointe du brevet 2.086.271.

Cependant, il s'avère que l'usure de cette portion décalée est très importante, de sorte qu'elle perd trop rapidement sa fonction de protection du contresep et de l'aileron-coutre.

La présente invention tend à proposer une nouvelle pointe de soc permettant de fournir un travail meilleur que celui réalisé avec les pointes connues tout en pouvant être utilisée beaucoup plus longtemps que ces pointes antérieures.

A cet effet, l'invention concerne une pointe de soc amovible correspondant à la revendication 1.

La pointe de soc selon l'invention est encore remarquable en ce que :
- lesdites extrémités d'attaque sont de section globalement trapézoïdale,
- le corps est un parallélépipède d'épaisseur B sur les côtés duquel sont ajoutées des portions décalées globalement parallélépipèdiques à leur extrémité avant, d'épaisseur A supérieure à B,
- le corps est de section globalement trapézoïdale aux extrémités et les portions décalées sont rapportées sur le bord de plus grande épaisseur dudit corps et ont sur leur bord externe une épaisseur au moins égale à l'épaisseur maximale du corps,
- les portions décalées dépassent des faces d'attaques vers l'avant,
- les portions décalées ont une face avant de section globalement carrée,
- l'épaisseur des portions décalées diminue peu à peu à mesure que l'on s'éloigne de l'extrémité d'attaque,
- le corps est de section globalement rectangulaire dans sa portion centrale,
- elle est fabriquée par estampage.

La présente invention sera mieux comprise par la description qui va suivre en référence au dessin joint sur lequel :
- la figure 1 est une vue de dessus en perspective d'un soc muni d'une pointe de soc de l'art antérieur,
- la figure 2 est une vue en perspective d'une pointe de soc selon l'invention dans une première forme de réalisation,
- la figure 3 est une vue en bout d'une pointe de soc suivant une seconde forme de réalisation de l'invention,
- la figure 4 est une vue en perspective d'une pointe de soc selon l'invention dans une troisième forme de réalisation,
- la figure 5 est une vue en coupe selon la ligne V - V de la figure 4,
- la figure 6 est une vue en bout de la pointe de soc de la figure 4.

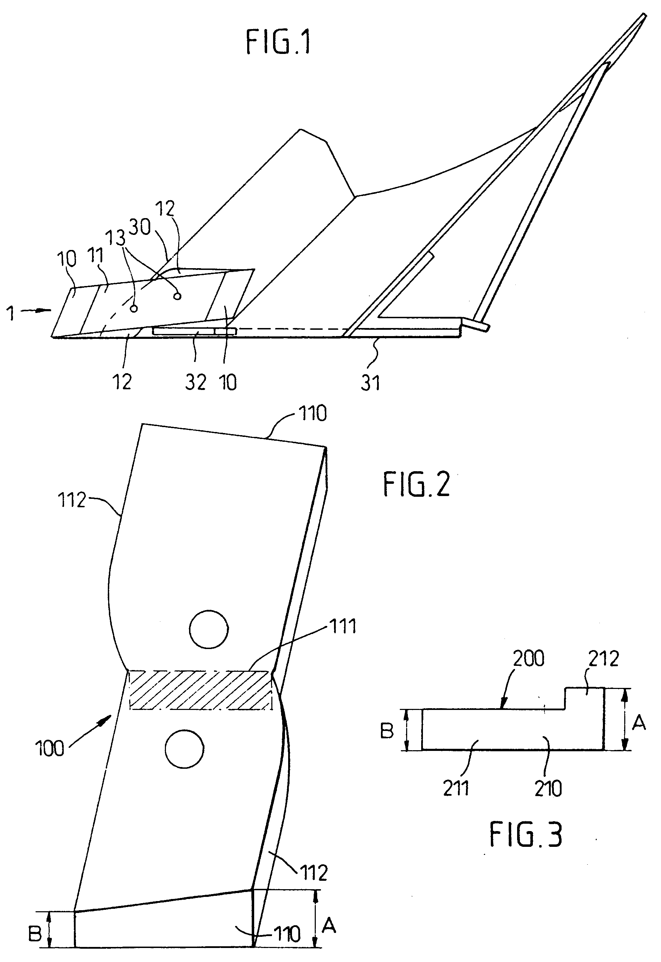

Sur la figure 1, l'on voit une pointe de soc 1 amovible selon le FR 2 570 242 fixée à l'avant d'un soc de charrue 30 grâce à des moyens de fixations tels que des boulons, non représentés, disposés dans les ouvertures 13.

Ladite pointe de soc 1 peut être disposée sur le soc de charrue suivant deux positions écartées l'une de l'autre de 180° afin que l'une ou l'autre des extrémités 10 d'attaque du sol soit utilisée.

Afin que la pointe de soc selon l'invention permette également la protection du contresep 31 et de l'aileron-coutre 32, deux portions décalées 12 globalement symétriques par rapport au centre géométrique de la pointe sont disposées de part et d'autre du corps 11 de ladite pointe à partir de l'extrémité d'attaque et sur le côté de celle-ci pénétrant dans la terre.

Les pointes de soc selon l'invention sont de même type que celle de ce brevet antérieur de la demanderesse et comportent un corps et deux portions décalées.

Suivant l'invention, les extrémités 110 d'attaque ont une épaisseur sur le bord externe desdites portions décalées supérieure à leur épaisseur sur le bord libre opposé.

Comme visible sur la figure 2 représentant une première forme de réalisation d'une pointe de soc 100 suivant l'invention, l'extrémité d'attaque 110 est d'épaisseur A sur le bord externe de la portion décalée plus importante que l'épaisseur B sur le côté opposé.

Le bord externe de la portion décalée est celui par lequel la pointe de soc pénètre la terre au cours du travail.

Une telle disposition permet donc d'avoir une quantité de matière plus importante dans la zone de la pointe de soc soumise à l'usure du frottement de la terre au cours du labourage.

Une pointe de soc selon l'invention peut ainsi être utilisée beaucoup plus longtemps qu'une pointe de soc de type connu avant qu'il soit nécessaire de la retourner pour utiliser l'autre extrémité d'attaque ou qu'il soit nécessaire de la changer.

La pointe de soc de la figure 2 a des extrémités de section trapézoïdale tandis que sa section dans la zone médiane du corps est, comme représenté par la zone en traits mixtes hachurée, rectangulaire comme à l'habitude.

La pointe de soc 200 selon la forme de réalisation de la figure 3 est formée d'un corps 211 parallélépipèdique d'épaisseur B sur les côtés duquel sont ajoutées des portions décalées 212 elles aussi globalement parallélépipèdiques à leur extrémité avant d'épaisseur A supérieure à B.

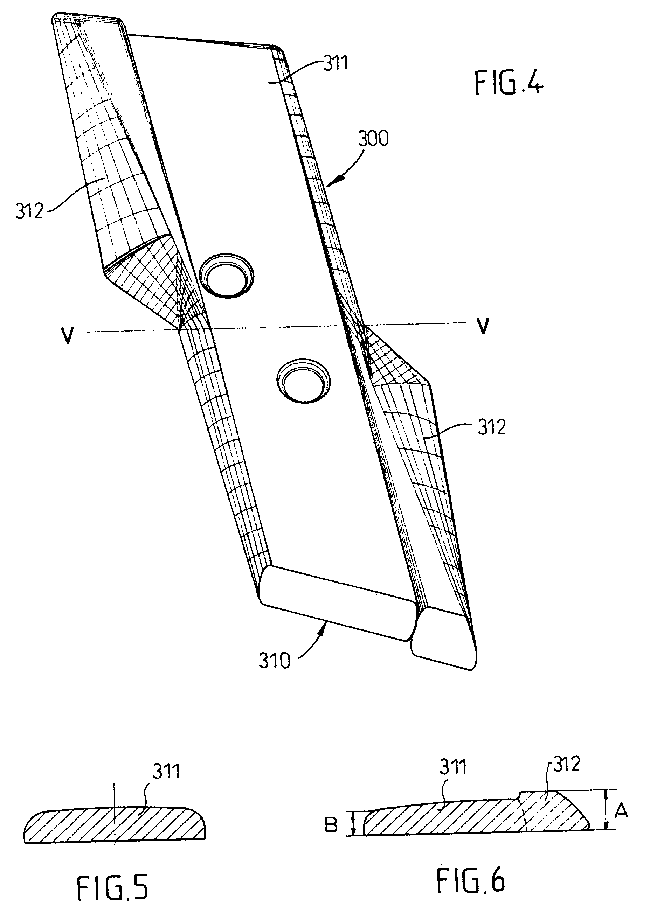

La figure 4 représente encore une autre forme de réalisation d'une pointe de soc 300 selon l'invention.

Dans cette forme de réalisation, le corps 311 est de section globalement rectangulaire dans sa partie médiane (figure 5) tandis qu'il est de section trapézoïdale aux extrémités 310.

Les portions décalées 312 sont rapportées sur le bord de plus grande épaisseur.

Ces portions décalées ont sur leur bord externe une épaisseur au moins égale à l'épaisseur maximale du corps 311 et sont à leur extrémité d'attaque de section trapézoïdale, rectangulaire ou carrée.

Comme représenté figure 6, l'épaisseur A de la pointe de soc sur le bord externe, destiné à pénétrer dans le sol, de la portion décalée 312 est supérieure à l'épaisseur B de ladite pointe de soc sur son bord opposé.

L'épaisseur de ces portions décalées 312 diminue peu à peu à mesure que l'on s'éloigne de l'extrémité d'attaque afin que le raccordement entre le soc et la face de la pointe située à distance dudit soc se fasse de manière régulière.

Les portions décalées 312 sont prévues avec une face avant de section importante afin de former une masse importante et solide pénétrant dans la terre.

Dans la forme de réalisation de la figure 4, l'efficacité des portions décalées 312 est accrue en les prévoyant dépassantes des faces d'attaques 310 vers l'avant.

On obtient ainsi un travail comparable à celui effectué lorsque l'on utilise un corps à barre, l'extrémité avant des portions décalées 312 tenant lieu de barre rapportée.

La pointe de soc selon l'invention peut être facilement fabriquée par forgeage ou de manière préférée par estampage ce qui permet de répartir la matière selon la disposition recherchée.

On ne sortirai pas du cadre de la présente invention telle que revendiquée en prévoyant d'autres sections non représentées au dessin.

De manière connue en soi, la pointe de soc est légèrement vrillée afin de s'adapter à la surface gauche que présente le soc à son extrémité avant.

## Revendications

1. Pointe de soc amovible, à deux extrémités d'attaque, destinée à être montée sur l'extrémité avant d'un soc de charrue dans deux positions permettant d'utiliser respectivement chacune des extrémités d'attaque, ladite pointe de soc étant sous la forme d'un corps (111, 211, 311) portant deux portions décalées (112, 212, 312) s'étendant à partir de chacune desdites extrémités d'attaque (110, 210, 310), caractérisée en ce que vue en coupe transversale, son épaisseur (A) sur le bord externe desdites portions décalées (112, 212, 312), destiné à pénétrer dans la terre, est supérieure à son épaisseur (B) sur le bord libre opposé et en ce que les extrémités d'attaque (110, 210, 310) ont une épaisseur sur le bord externe desdites portions décalées supérieure à leur épaisseur sur le bord libre opposé.

2. Pointe de soc selon la revendication 1, caractérisée en ce que lesdites extrémités d'attaque (110) sont de section globalement trapézoïdale.

3. Pointe de soc selon la revendication 1, caractérisée en ce que le corps (211) est un parallélépipède d'épaisseur (B) sur les côtés duquel sont ajoutées des portions décalées (212) globalement parallélépipèdiques à leur extrémité avant d'épaisseur (A) supérieure à (B).

4. Pointe de soc selon la revendication 1, caractérisée en ce que le corps (311) est de section globalement trapézoïdale aux extrémités (310) et en ce que les portions décalées (312) sont rapportées sur le bord de plus grande épaisseur dudit corps et ont sur leur bord externe une épaisseur au moins égale à l'épaisseur maximale du corps (311).

5. Pointe de soc selon l'une quelconque des revendications précédentes, caractérisée en ce que les portions décalées (312) dépassent des faces d'attaques (310) vers l'avant.

6. Pointe de soc selon l'une quelconque des revendications 3 à 5, caractérisée en ce que les portions décalées (212, 312) ont une face avant de section globalement carrée.

7. Pointe de soc selon l'une quelconque des revendications précédentes, caractérisée en ce que l'épaisseur des portions décalées (112, 212, 312) diminue peu à peu à mesure que l'on s'éloigne de l'extrémité d'attaque (110, 210, 310).

8. Pointe de soc selon l'une quelconque des revendications précédentes, caractérisée en ce que le corps (111, 211, 311) est de section globalement rectangulaire dans sa portion centrale.

9. Pointe de soc selon l'une quelconque des revendications précédentes, caractérisé en ce qu'elle est fabriquée par estampage.

## Claims

1. A removable plough share point having two working ends, intended to be mounted on the front end of a plough share in two positions permitting each of the working ends respectively to be used, the plough share point being in the form of a body (111, 211, 311) carrying two offset portions (112, 212, 312) extending from each of said working ends (110, 210, 310), characterised in that seen in transverse section, its thickness (A) on the external edge of the offset portions (112, 212, 312) intended to penetrate the ground, is greater than its thickness (B) on the opposed free edge and in that the working ends (110, 210, 310) have a thickness at the extreme edge of the offset portions greater than their thickness at the opposed free edge.

2. A plough share point according to Claim 1, characterised in that the working ends (110) are of generally trapezoidal section.

3. A plough share point according to Claim 1, characterised in that the body (211) is a parallelepiped of thickness (B) on the sides of which are added, to their front ends of thickness (A) greater than (B), offset generally parallelepipedic portions (212).

4. A plough share point according to Claim 1, characterised in that the body (311) is of generally trapezoidal section at the ends (310) and in that the offset portions (312) are returned on the edge of the body of greatest thickness and have on their external edge a thickness at least equal to the maximum thickness of the body (311).

5. A plough share point according to any one of the preceding claims, characterised in that the offset portions (312) extend beyond the working faces (310) towards the front.

6. A plough share point according to any one of Claims 3 to 5, characterised in that the offset portions (212, 312) have a forward face of generally square section.

7. A plough share point according to any one of the preceding claims, characterised in that the thickness of the offset portions (112, 212, 312) decreases little by little the further they are from the working end (110, 210, 310).

8. A plough share point according to any one of the preceding claims, characterised in that the body (111, 211, 311) is of substantially rectangular section in its central portion.

9. A plough share point according to any one of the preceding claims, characterised in that it is made by stamping.

## Patentansprüche

1. Auswechselbare Pflugscharspitze mit zwei Arbeitsenden zur Befestigung am vorderen Ende einer Pflugschar in zwei Stellungen, die es gestatten, jeweils eines der Arbeitsenden zu benützen, wobei die Pflugscharspitze in Form eines Körpers (111,211,311) ausgebildet ist, der zwei zueinander versetzte Abschnitte (112,212,312) aufweist, die sich jeweils von einem der Arbeitsenden (110,210,310) aus erstrecken, **dadurch gekennzeichnet**, daß, im Querschnitt gesehen, die Dicke (A) der Pflugscharspitze am Außenrand der zueinander versetzten Abschnitte (112,212,312), der zum Eindringen in den Boden dient, größer ist als ihre Dicke (B) am freien gegenüberliegenden Rand, und daß die Arbeitsenden (110,210,310) am Außenrand der zueinander versetzten Abschnitte eine Dicke aufweisen, die größer ist als ihre Dicke am gegenüberliegenden freien Rand.

2. Pflugscharspitze nach Anspruch 1, dadurch gekennzeichnet, daß die Arbeitsenden (110) einen im wesentlichen trapezförmigen Querschnitt aufweisen.

3. Pflugscharspitze nach Anspruch 1, dadurch gekennzeichnet, daß der Körper (211) ein Parallelepiped mit einer Seitendicke (B) ist, an welches versetzte, an ihrem vorderen Ende im allgemeinen parallelepipedförmige Abschnitte (212) angesetzt sind, deren Dicke (A) größer als (B) ist.

4. Pflugscharspitze nach Anspruch 1, dadurch gekennzeichnet, daß der Körper (311) einen an seinen Enden (310) im allgemeinen trapezförmigen Querschnitt aufweist und die zueinander versetzten Abschnitte (312) an dem Rand größter Dicke des Körpers befestigt sind und an ihrem äußeren Rand eine Dicke mindestens gleich der Maximaldicke des Körpers (311) aufweisen.

5. Pflugscharspitze nach einem der vorhergehenden Ansprüche, dadurch gekennzeichnet, daß die zueinander versetzten Abschnitte (312) über die Arbeitsflächen (310) nach vorne überstehen.

6. Pflugscharspitze nach einem der Ansprüche 3 bis 5, dadurch gekennzeichnet, daß die zueinander versetzten Abschnitte (212,312) eine Vorderseite von im allgemeinen viereckigem Querschnitt aufweisen.

7. Pflugscharspitze nach einem der vorhergehenden Ansprüche, dadurch gekennzeichnet, daß die Dicke der zueinander versetzten Abschnitte (112,212,312) nach und nach mit zunehmender Entfernung von der Arbeitsfläche (110,210,310) abnimmt.

8. Pflugscharspitze nach einem der vorhergehenden Ansprüche, dadurch gekennzeichnet, daß der Körper (111,211,311) in seinem Mittelbereich einen im wesentlichen rechteckigen Querschnitt aufweist.

9. Pflugscharspitze nach einem der vorhergehenden Ansprüche, dadurch gekennzeichnet, daß sie durch Gesenkschmieden hergestellt ist.
